# EUROPEAN PATENT APPLICATION

(11) **EP 3 991 572 A1**
(43) Date of publication of application: **04.05.2022**
(21) Application number: 20832064.8
(22) Date of filing: 19.06.2020
(51) Int. Cl.: A23L 29/00, A23L 2/00, A23L 2/52

(54) **ISOXANTHOHUMOL-CONTAINING COMPOSITION, XANTHOHUMOL-CONTAINING COMPOSITION, METHODS FOR PRODUCING SAME, AND METHODS FOR REDUCING BITTERNESS THEREOF**

(30) Priority: 28.06.2019 JP 2019122009
(71) Applicant: Suntory Holdings Limited, Osaka 530-8203 (JP)
(72) Inventor: NAKAHARA, Koichi, Soraku-gun, Kyoto 619-0284 (JP); UEMURA, Masahide, Soraku-gun, Kyoto 619-0284 (JP); YOSHII, Takaaki, Soraku-gun, Kyoto 619-0284 (JP)
(74) Representative: Vossius & Partner Patentanwälte Rechtsanwälte mbB
(86) International application number: PCT/JP2020/024121
(87) International publication number: WO 2020/262232

(57) **Abstract**

The present invention aims to provide an isoxanthohumol-containing composition having reduced bitterness from the isoxanthohumol, a production method thereof, a xanthohumol-containing composition having reduced bitterness from the xanthohumol, a production method thereof, a method of reducing the bitterness of isoxanthohumol, and a method of reducing the bitterness of xanthohumol. The present invention relates to, for example, an isoxanthohumol-containing composition containing isoxanthohumol and ethyl glycoside, wherein a weight ratio of ethyl glycoside to isoxanthohumol (ethyl glycoside/isoxanthohumol) is 2.5 to 400.

## Description

### TECHNICAL FIELD

The present invention relates to an isoxanthohumol-containing composition and a production method thereof. The present invention also relates to a method of reducing the bitterness of isoxanthohumol. The present invention still also relates to a xanthohumol-containing composition and a production method thereof. Further, the present invention relates to a method of reducing the bitterness of xanthohumol.

### BACKGROUND ART

Xanthohumol is a polyphenol present in hop (scientific name: *Humulus lupulus)* plants in the family Cannabaceae. Hop is used as a raw material of beer. Isoxanthohumol is a type of polyphenol and is an ingredient of beer.

According to Patent Literature 1, xanthohumol acts to decrease blood triglyceride level and blood glucose level. Xanthohumol has also been reported as having carcinogenic inhibitory effect, anti-inflammatory effect, anti-obesity effect, and bone resorption inhibitory effect. According to Patent Literature 2, isoxanthohumol inhibited inflammation of microglial cells exposed to inflammatory stimulation.

### CITATION LIST

### - Patent Literature

Patent Literature 1: JP 2006-306800 A
Patent Literature 2: JP 2018-095580 A

### SUMMARY OF INVENTION

### - Technical Problem

As described above, isoxanthohumol and xanthohumol have been reported as having useful physiological actions. However, isoxanthohumol tastes strongly bitter. In oral compositions containing isoxanthohumol, particularly in beverages containing a relatively large amount of isoxanthohumol, the bitterness from the isoxanthohumol (bitterness derived from the isoxanthohumol) may be evident, which may impair beverage suitability for drinking. Xanthohumol also tastes strongly bitter, and there is a demand for a technique that can reduce the bitterness.

The present invention aims to provide an isoxanthohumol-containing composition having reduced bitterness from the isoxanthohumol, and a production method thereof. The present invention also aims to provide a xanthohumol-containing composition having reduced bitterness from the xanthohumol, and a production method thereof. The present invention still also aims to provide a method of reducing the bitterness of isoxanthohumol, and a method of reducing the bitterness of xanthohumol.

### - Solution to Problem

As a result of extensive studies to solve the above issue, the present inventors found that the bitterness from the isoxanthohumol in an isoxanthohumol-containing composition can be reduced by adding ethyl glycoside in a predetermined ratio to the isoxanthohumol. The present inventors also found that the bitterness from the xanthohumol in a xanthohumol-containing composition can be reduced by adding ethyl glycoside in a predetermined ratio to the xanthohumol.

Specifically, the present invention relates to the following compositions and the like.
(1) An isoxanthohumol-containing composition containing isoxanthohumol and ethyl glycoside, wherein a weight ratio of ethyl glycoside to isoxanthohumol (ethyl glycoside/isoxanthohumol) is 2.5 to 400.
(2) The isoxanthohumol-containing composition according to (1) above, wherein the composition is a beverage.
(3) The isoxanthohumol-containing composition according to (2) above, wherein an isoxanthohumol concentration is 20 to 200 ppm.
(4) The isoxanthohumol-containing composition according to (2) or (3) above, wherein an ethyl glycoside concentration is 50 to 20000 ppm.
(5) The isoxanthohumol-containing composition according to any one of (1) to (4) above, wherein the ethyl glycoside is ethyl glucoside.
(6) A xanthohumol-containing composition containing xanthohumol and ethyl glycoside, wherein a weight ratio of ethyl glycoside to xanthohumol (ethyl glycoside/xanthohumol) is 2 to 200.
(7) The xanthohumol-containing composition according to (6) above, wherein the composition is a beverage.
(8) The xanthohumol-containing composition according to (7) above, wherein a xanthohumol concentration is 25 to 200 ppm.
(9) The xanthohumol-containing composition according to (7) or (8) above, wherein an ethyl glycoside concentration is 50 to 20000 ppm.
(10) The xanthohumol-containing composition according to any one of (6) to (9) above, wherein the ethyl glycoside is ethyl glucoside.
(11) A method of producing an isoxanthohumol-containing composition containing isoxanthohumol and ethyl glycoside, including adding ethyl glycoside such that a weight ratio of ethyl glycoside to isoxanthohumol (ethyl glycoside/isoxanthohumol) in the composition is 2.5 to 400.
(12) A method of reducing the bitterness of isoxanthohumol, including mixing isoxanthohumol and ethyl glycoside such that a weight ratio of ethyl glycoside to isoxanthohumol (ethyl glycoside/isoxanthohumol) is 2.5 to 400.
(13) A method of producing a xanthohumol-containing composition containing xanthohumol and ethyl glycoside, including adding ethyl glycoside such that a weight ratio of ethyl glycoside to xanthohumol (ethyl glycoside/xanthohumol) in the composition is 2 to 200.
(14) A method of reducing the bitterness of xanthohumol, including mixing xanthohumol and ethyl glycoside such that a weight ratio of ethyl glycoside to xanthohumol (ethyl glycoside/xanthohumol) is 2 to 200.

### - Advantageous Effects of Invention

The present invention can provide an isoxanthohumol-containing composition having reduced bitterness from the isoxanthohumol, and a production method thereof. The present invention can also provide a xanthohumol-containing composition having reduced bitterness from the xanthohumol, and a production method thereof. The present invention can still also provide a method of reducing the bitterness of isoxanthohumol, and a method of reducing the bitterness of xanthohumol.

### DESCRIPTION OF EMBODIMENTS

### <Isoxanthohumol-containing composition>

The isoxanthohumol-containing composition of the present invention contains isoxanthohumol and ethyl glycoside, wherein a weight ratio of ethyl glycoside to isoxanthohumol (ethyl glycoside/isoxanthohumol) is 2.5 to 400.

When the weight ratio of ethyl glycoside to isoxanthohumol is in the above range, the bitterness from the isoxanthohumol (bitterness derived from the isoxanthohumol) can be reduced by the ethyl glycoside.

The present invention may use any isoxanthohumol. For example, synthetic isoxanthohumol may be used. Isoxanthohumol can be prepared by isomerizing xanthohumol. For example, it can be prepared from xanthohumol or a hop extract containing xanthohumol through a process such as heating. Isoxanthohumol usable in the present invention may be one prepared as described above. Commercially available isoxanthohumol can also be used.

Ethyl glycoside is a compound having a structure in which a hydroxy group attached to the carbon atom at position 1 of a reducing sugar is replaced by an ethoxy group. A preferred reducing sugar to form ethyl glycoside is a monosaccharide, such as glucose, fructose, galactose, mannose, or xylose. The reducing sugar may be in the D form, L form, or DL form. The D form is preferred.

Examples of the ethyl glycoside include ethyl glucoside, ethyl fructoside, ethyl galactoside, ethyl mannoside, and ethyl xyloside. The ethyl glycoside may be of one type or a combination of two or more types. In particular, the ethyl glycoside is preferably ethyl glucoside. The ethyl glucoside may be either ethyl-α-glucoside or ethyl-β-glucoside, or may be a combination of ethyl-α-glucoside and ethyl-β-glucoside. In one embodiment, the ethyl glycoside may be ethyl-α-glucoside. The ethyl glycoside may be ethyl-α-D-glucoside.

The ethyl glycoside may be produced by any method. For example, the ethyl glycoside can be obtained by reacting a reducing sugar with ethanol. For example, the ethyl glucoside can be obtained by reacting glucose with ethanol.

Usually, the isoxanthohumol-containing composition of the present invention is an oral composition. The composition of the present invention may have any form such as a liquid, gel, slurry, or solid form. A liquid form (liquid composition) is preferred.

Preferably, the isoxanthohumol-containing composition of the present invention is a beverage (isoxanthohumol-containing beverage). When the isoxanthohumol-containing beverage has a weight ratio of ethyl glycoside to isoxanthohumol (ethyl glycoside/isoxanthohumol) of 2.5 to 400, the bitterness from the isoxanthohumol can be effectively reduced.

When the isoxanthohumol-containing composition is a beverage, the isoxanthohumol concentration in the beverage is preferably 20 ppm or more and is preferably 200 ppm or less. When the isoxanthohumol concentration is in the above range, the bitterness from the isoxanthohumol can be effectively reduced by the ethyl glycoside. The isoxanthohumol concentration in the beverage is more preferably 50 ppm or more, still more preferably 100 ppm or more, and is more preferably 150 ppm or less. In one embodiment, the isoxanthohumol concentration in the isoxanthohumol-containing beverage is preferably 20 to 200 ppm, more preferably 50 to 200 ppm, still more preferably 100 to 200 ppm, particularly preferably 100 to 150 ppm. Herein, the term "ppm" refers to the ppm by weight/volume (w/v) .

The isoxanthohumol concentration and the ethyl glycoside concentration are usually the isoxanthohumol content and the ethyl glycoside content, respectively, when the isoxanthohumol-containing composition is liquid.

When the isoxanthohumol-containing composition is a beverage, the ethyl glycoside concentration is preferably 50 ppm or more and is preferably 20000 ppm or less.

When the ethyl glycoside concentration is in the above range, the bitterness from the isoxanthohumol can be more effectively reduced. The ethyl glycoside concentration in the isoxanthohumol-containing beverage is more preferably 100 ppm or more, still more preferably 500 ppm or more, particularly preferably 1000 ppm or more. In one embodiment, the ethyl glycoside concentration in the isoxanthohumol-containing beverage is preferably 50 to 20000 ppm, more preferably 100 to 20000 ppm, still more preferably 500 to 20000 ppm, particularly preferably 1000 to 20000 ppm.

The ethyl glycoside concentration refers to the total ethyl glycoside concentration.

The isoxanthohumol content and the ethyl glycoside content in the isoxanthohumol-containing composition can be measured by high performance liquid chromatography (HPLC).

In one embodiment, preferred ranges of the isoxanthohumol concentration and the ethyl glycoside concentration in the beverage may be as follows.

When the isoxanthohumol concentration is more than 0 ppm and less than 20 ppm, the ethyl glycoside concentration is 50 to 5000 ppm.

When the isoxanthohumol concentration is 20 ppm or more and less than 50 ppm, the ethyl glycoside concentration is 50 ppm or more and less than 20000 ppm (more preferably 50 to 10000 ppm).

When the isoxanthohumol concentration is 50 ppm or more and less than 100 ppm, the ethyl glycoside concentration is 500 to 20000 ppm (more preferably 5000 to 10000 ppm).

When the isoxanthohumol concentration is 100 to 150 ppm, the ethyl glycoside concentration is 500 to 20000 ppm (more preferably 1000 to 20000 ppm, still more preferably 5000 to 20000 ppm).

When the isoxanthohumol concentration is more than 150 ppm and 200 ppm or less, the ethyl glycoside concentration is 500 to 20000 ppm (more preferably 1000 to 20000 ppm, still more preferably 5000 to 20000 ppm).

When the concentrations are in the above ranges, advantageously, a greater effect of reducing the bitterness of the isoxanthohumol can be achieved owing to the presence of the ethyl glycoside, compared to when no ethyl glycoside is present.

### <Xanthohumol-containing composition>

The xanthohumol-containing composition of the present invention contains xanthohumol and ethyl glycoside, wherein a weight ratio of ethyl glycoside to xanthohumol (ethyl glycoside/xanthohumol) is 2 to 200.

When the weight ratio of ethyl glycoside to xanthohumol is in the above range, the bitterness from the xanthohumol (bitterness derived from the xanthohumol) can be reduced by the ethyl glycoside.

The present invention may use any xanthohumol. For example, synthetic xanthohumol or an extract obtained from a plant containing xanthohumol may be used. Examples of the plant containing xanthohumol include hop (*Humulus lupulus*) cones. The composition can contain xanthohumol in the form of a hop extract or its concentrate.

Commercially available xanthohumol can also be used.

The ethyl glycoside and its preferred embodiments in the xanthohumol-containing composition are the same as those in the isoxanthohumol-containing composition described above. The ethyl glycoside is preferably ethyl glucoside. In one embodiment, the ethyl glycoside may be ethyl-α-glucoside. The ethyl glycoside may be ethyl-α-D-glucoside.

Usually, the xanthohumol-containing composition of the present invention is an oral composition. The composition of the present invention may have any form such as a liquid, gel, slurry, or solid form. A liquid form (liquid composition) is preferred.

Preferably, the xanthohumol-containing composition of the present invention is a beverage (xanthohumol-containing beverage). When the xanthohumol-containing beverage has a weight ratio of ethyl glycoside to xanthohumol (ethyl glycoside/xanthohumol) of 2 to 200, the bitterness from the xanthohumol can be effectively reduced.

When the xanthohumol-containing composition is a beverage, the xanthohumol concentration is preferably 25 ppm or more and is preferably 200 ppm or less. When the xanthohumol concentration is in the above range, the bitterness from the xanthohumol can be effectively reduced by the ethyl glycoside. The xanthohumol concentration in the beverage is more preferably 50 ppm or more, still more preferably 100 ppm or more, and is more preferably 150 ppm or less. In one embodiment, the xanthohumol concentration in the xanthohumol-containing beverage is preferably 25 to 200 ppm, more preferably 50 to 200 ppm, still more preferably 100 to 200 ppm, particularly preferably 100 to 150 ppm.

The xanthohumol concentration and the ethyl glycoside concentration are usually the xanthohumol content and the ethyl glycoside content, respectively, when the xanthohumol-containing composition is liquid.

When the xanthohumol-containing composition is a beverage, the ethyl glycoside concentration is preferably 50 ppm or more and is preferably 20000 ppm or less.

When the ethyl glycoside concentration is in the above range, the bitterness from the xanthohumol can be more effectively reduced. The ethyl glycoside concentration in the xanthohumol-containing beverage is more preferably 100 ppm or more, still more preferably 500 ppm or more, particularly preferably 1000 ppm or more, and is more preferably 10000 ppm or less. In one embodiment, the ethyl glycoside concentration in the xanthohumol-containing beverage is preferably 50 to 20000 ppm, more preferably 100 to 20000 ppm, still more preferably 500 to 20000 ppm, particularly preferably 1000 to 20000 ppm, most preferably 1000 to 10000 ppm.

The xanthohumol content and the ethyl glycoside content in the xanthohumol-containing composition can be measured by high performance liquid chromatography (HPLC).

In one embodiment, preferred ranges of the xanthohumol concentration and the ethyl glycoside concentration in the beverage may be as follows.

When the xanthohumol concentration is more than 0 ppm and less than 25 ppm, the ethyl glycoside concentration is 50 ppm or more and less than 5000 ppm.

When the xanthohumol concentration is 25 ppm or more and less than 50 ppm, the ethyl glycoside concentration is 50 ppm or more (more preferably 100 ppm or more) and less than 10000 ppm.

When the xanthohumol concentration is 50 ppm or more and less than 100 ppm, the ethyl glycoside concentration is 100 to 10000 ppm (more preferably 500 to 10000 ppm, still more preferably 1000 to 10000 ppm, particularly preferably 1000 to 5000 ppm).

When the xanthohumol concentration is 100 to 150 ppm, the ethyl glycoside concentration is 500 to 20000 ppm (more preferably 1000 to 10000 ppm).

When the xanthohumol concentration is more than 150 ppm and 200 ppm or less, the ethyl glycoside concentration is 500 to 20000 ppm (more preferably 1000 to 10000 ppm, still more preferably 5000 to 10000 ppm).

When the concentrations are in the above ranges, advantageously, a greater effect of reducing the bitterness of the xanthohumol can be achieved owing to the presence of the ethyl glycoside, compared to when no ethyl glycoside is present.

The isoxanthohumol-containing composition and the xanthohumol-containing composition of the present invention are hereinafter collectively referred to as "the compositions of the present invention". The compositions of the present invention may contain one or more additives such as fragrances, vitamins, pigments, antioxidants, acidulants, emulsifiers, preservatives, seasonings, extracts, pH regulators, and quality stabilizers, as long as the effect of the present invention is not impaired. The compositions of the present invention may contain water. In one embodiment, when the compositions of the present invention are liquid, the compositions of the present invention contain water. In one embodiment, when the compositions of the present invention are liquid beverages, the water content in each beverage may be 85 wt% or more or 90 wt% or more, preferably 90 to 99.99 wt%.

When the compositions of the present invention are beverages, non-limiting examples of the beverages include tea beverages (e.g., green tee beverages, oolong tea beverages, and black tea beverages), coffee beverages, sports beverages, energy drinks, beer, and beer-taste beverages.

In the present invention, the beverages may have any suitable form such as a liquid, gel, slurry, or solid form. A liquid form is preferred. A solid beverage is one that is diluted with a drinking solvent (such as water) to be served as a beverage.

For example, in the case of a liquid beverage, the beverage may be in the form of a ready-to-drink type beverage or a concentrated beverage. In particular, the ready-to-drink type beverage is preferred. The term "ready-to-drink type beverage" refers to a beverage ready for drinking without being diluted. The term "concentrated beverage" refers to a beverage that is diluted with a drinking solvent (such as water) to be served for drinking.

In the case of a solid beverage, the beverage may be in any of various forms such as powders and granules. In the case of a concentrated beverage or a solid beverage, preferably, the isoxanthohumol or xanthohumol concentration and the ethyl glycoside concentration are in the preferred ranges described above after the beverage is diluted with water or the like to a concentration at the time of drinking.

In the present invention, the beverage may be in any form, and can be provided as a packaged beverage. In the case of a liquid beverage, preferably, the beverage is provided as a packaged beverage. In one embodiment, preferably, the beverage is a packaged beverage. The form of the package is not limited. A hermetic package such as a bottle, can, plastic bottle, paper pack, aluminum pouch, or plastic pouch may be packed with the beverage so as to provide a packaged beverage or the like.

### <Method of producing isoxanthohumol-containing composition>

The present invention also encompasses the following method of producing an isoxanthohumol-containing composition:
a method of producing an isoxanthohumol-containing composition containing isoxanthohumol and ethyl glycoside, including adding ethyl glycoside such that a weight ratio of ethyl glycoside to isoxanthohumol (ethyl glycoside/isoxanthohumol) in the composition is 2.5 to 400.

The method and order of adding ethyl glycoside are not limited. Ethyl glycoside only needs to be added according to the amount of isoxanthohumol in the isoxanthohumol-containing composition such that the weight ratio of ethyl glycoside to isoxanthohumol (ethyl glycoside/isoxanthohumol) in the composition is 2.5 to 400. In one embodiment, the production of the isoxanthohumol-containing composition may include adding xanthohumol or a hop extract containing xanthohumol and isomerizing the xanthohumol by heating to allow the composition to contain isoxanthohumol. An isoxanthohumol-containing composition having reduced bitterness from the isoxanthohumol can be produced by the production method described above.

### <Method of reducing bitterness of isoxanthohumol>

The following method of reducing the bitterness of isoxanthohumol is also encompassed by the present invention:
a method of reducing the bitterness of isoxanthohumol, including mixing isoxanthohumol and ethyl glycoside such that a weight ratio of ethyl glycoside to isoxanthohumol (ethyl glycoside/isoxanthohumol) is 2.5 to 400.

The bitterness of the isoxanthohumol can be reduced by using the ethyl glycoside in the above weight ratio to the isoxanthohumol. The ethyl glycoside is effective in suppressing the bitterness of the isoxanthohumol.

In one embodiment, the method of the present invention may be a method of reducing the bitterness from the isoxanthohumol in the isoxanthohumol-containing composition, including mixing isoxanthohumol and ethyl glycoside in the above weight ratio. The bitterness from the isoxanthohumol is reduced in the isoxanthohumol-containing composition containing ethyl glycoside, which is obtainable by mixing isoxanthohumol and ethyl glycoside in the above weight ratio. The bitterness from the isoxanthohumol can be reduced in the isoxanthohumol-containing composition by adding ethyl glycoside such that the weight ratio of ethyl glycoside to isoxanthohumol (ethyl glycoside/isoxanthohumol) in the composition is in the above range. Isoxanthohumol and ethyl glycoside may be mixed by any method. For example, isoxanthohumol or a composition containing isoxanthohumol may be mixed with ethyl glycoside, or isoxanthohumol may be mixed with ethyl glycoside or a composition containing ethyl glycoside.

In the method of producing an isoxanthohumol-containing composition and the method of reducing the bitterness, preferred embodiments and the like of the isoxanthohumol-containing composition are the same as those of the isoxanthohumol-containing composition. Preferably, the isoxanthohumol-containing composition is an isoxanthohumol-containing beverage. The ethyl glycoside, isoxanthohumol, ethyl glycoside content, isoxanthohumol content, their preferred embodiments, and the like are the same as those of the isoxanthohumol-containing composition described above.

### <Method of producing xanthohumol-containing composition>

The method of producing a xanthohumol-containing composition of the present invention is a method of producing a xanthohumol-containing composition containing xanthohumol and ethyl glycoside, including adding ethyl glycoside such that a weight ratio of ethyl glycoside to xanthohumol (ethyl glycoside/xanthohumol) in the composition is 2 to 200.

The method and order of adding ethyl glycoside are not limited. Ethyl glycoside only needs to be added according to the amount of xanthohumol in the xanthohumol-containing composition such that the weight ratio of ethyl glycoside to xanthohumol (ethyl glycoside/xanthohumol) in the composition is 2 to 200. A xanthohumol-containing composition having reduced bitterness from the xanthohumol can be produced by the production method described above.

### <Method of reducing bitterness of xanthohumol>

The following method of reducing the bitterness of xanthohumol is also encompassed by the present invention:
a method of reducing the bitterness of xanthohumol in a xanthohumol-containing composition, including mixing xanthohumol and ethyl glycoside such that a weight ratio of ethyl glycoside to xanthohumol (ethyl glycoside/xanthohumol) is 2 to 200 in the composition.

The bitterness of the xanthohumol can be reduced by using the ethyl glycoside in the above weight ratio to the xanthohumol. The ethyl glycoside is effective in suppressing the bitterness of the xanthohumol.

In one embodiment, the method of the present invention may be a method of reducing the bitterness from the xanthohumol in the xanthohumol-containing composition, including mixing xanthohumol and ethyl glycoside in the above weight ratio. The bitterness from the xanthohumol is reduced in the xanthohumol-containing composition containing ethyl glycoside, which is obtainable by mixing xanthohumol and ethyl glycoside in the above weight ratio. The bitterness from the xanthohumol can be reduced in the xanthohumol-containing composition by adding ethyl glycoside such that the weight ratio of ethyl glycoside to xanthohumol (ethyl glycoside/xanthohumol) in the composition is in the above range.

Xanthohumol and ethyl glycoside may be mixed by any method. For example, xanthohumol or a composition containing xanthohumol may be mixed with ethyl glycoside, or the isoxanthohumol may be mixed with ethyl glycoside or a composition containing ethyl glycoside.

In the method of producing a xanthohumol-containing composition and the method of reducing the bitterness, preferred embodiments and the like of the xanthohumol-containing composition are the same as those of the xanthohumol-containing composition. Preferably, the xanthohumol-containing composition is a xanthohumol-containing beverage. The ethyl glycoside, xanthohumol, ethyl glycoside content, xanthohumol content, their preferred embodiments, and the like are the same as those of the xanthohumol-containing composition described above.

### EXAMPLES

The following provides examples that more specifically describe the present invention. The present invention is not limited to these examples.

In Examples, ethyl glycoside was ethyl-α-D-glucoside (hereinafter, "EG").

### (Preparation Example 1)

An isoxanthohumol emulsion and a xanthohumol emulsion were prepared by the following method using an emulsifier.

Decaglycerol monomyristate (HLB: 15.7) (4.23 g) was heated to 200°C, and isoxanthohumol (0.50 g) was added and mixed to provide a uniform mixture. Further, soy lecithin (HLB: less than 5) (0.47 g) was added and mixed to provide a uniform mixture. Subsequently, the mixture was left for cooling down to 80°C. Further, pure water (4.80 g) was added and mixed to provide a uniform mixture. Thus, an isoxanthohumol emulsion was obtained.

A xanthohumol emulsion was prepared by the same method described above, except that xanthohumol was used instead of isoxanthohumol.

### (Example 1)

The isoxanthohumol emulsion obtained in Preparation Example 1 and EG were dissolved in water to prepare samples.

The samples were prepared with five different isoxanthohumol concentrations of 20 ppm, 50 ppm, 100 ppm, 150 ppm, and 200 ppm, and eight different EG concentrations of 0 ppm, 50 ppm, 100 ppm, 500 ppm, 1000 ppm, 5000 ppm, 10000 ppm, and 20000 ppm. The isoxanthohumol emulsion was used in amounts that gave the above isoxanthohumol concentration values in the respective samples.

Two panelists experienced in sensory evaluation performed sensory evaluation on the bitterness of each sample. In the sensory evaluation, each panelist tasted the sample (10 mL) in the mouth for five seconds, spit out the sample, and evaluated the bitterness intensity. When evaluating a different sample, each panelist rinsed the mouth with water until the taste in the mouth disappeared. The bitterness intensity of each sample was evaluated on a scale of 1 to 7 described below. Then, the scores given by the panelists were averaged. For the sensory evaluation, the panelists exchanged views in advance, using samples having an EG concentration of 0 ppm (with no addition of EG) and containing an isoxanthohumol emulsion (specifically, samples having an isoxanthohumol concentration of 20 ppm, 100 ppm, 150 ppm, or 200 ppm), to make sure that the samples having the same isoxanthohumol concentration would be given the same score for the bitterness intensity evaluation. No bitterness derived from the emulsifier was tasted.
1: No bitterness was tasted.
2: The bitterness was tasted only slightly.
3: The bitterness was tasted somewhat slightly.
4: The bitterness was tasted.
5: The bitterness was tasted somewhat strongly.
6: The bitterness was tasted strongly.
7: The bitterness was tasted very strongly.

Table 1 shows the weight ratio of ethyl glycoside (EG) to isoxanthohumol (IX) (EG/IX) in each sample.

Table 2 shows the results of the sensory evaluation (average scores of the bitterness intensity) of each sample.

Table 3 shows the degree of bitterness reduction achieved by addition of EG, calculated from the results shown in Table 2. The degree of bitterness reduction shown in Table 3 is indicated by a value of X1 minus Y1 (X1 - Y1), where X1 is the score of a first sample shown in Table 2 not containing EG and Y1 is the score of a second sample containing EG shown in Table 2, the second sample having the same isoxanthohumol concentration as that of the first sample. When the value of (X1 - Y1) shown in Table 3 is 1 or greater, the bitterness was evaluated as being reduced.

**[Table 1]**

| EG/IX | | IX (ppm) | | | | |
|---|---|---|---|---|---|---|
| | | 20 | 50 | 100 | 150 | 200 |
| EG (ppm) | 0 | 0 | 0 | 0 | 0 | 0 |
| | 50 | 2.5 | - | - | - | - |
| | 100 | - | 2 | 1 | 0.7 | 0.5 |
| | 500 | - | 10 | 5 | 3.3 | 2.5 |
| | 1000 | - | 20 | 10 | 6.7 | 5 |
| | 5000 | - | 100 | 50 | 33.3 | 25 |
| | 10000 | - | 200 | 100 | 66.7 | 50 |
| | 20000 | - | 400 | 200 | 133.3 | 100 |

**[Table 2]**

| Bitterness intensity | | IX (ppm) | | | | |
|---|---|---|---|---|---|---|
| | | 20 | 50 | 100 | 150 | 200 |
| EG (ppm) | 0 | 3.0 | 3.5 | 5.0 | 6.0 | 7.0 |
| | 50 | 2.0 | - | - | - | - |
| | 100 | - | 3.5 | 5.0 | 6.0 | 7.0 |
| | 500 | - | 2.5 | 4.0 | 5.0 | 6.0 |
| | 1000 | - | 2.5 | 4.0 | 4.0 | 4.5 |
| | 5000 | - | 2.0 | 2.5 | 3.0 | 4.0 |
| | 10000 | - | 1.5 | 2.0 | 2.5 | 3.0 |
| | 20000 | - | 1.5 | 1.5 | 1.5 | 2.5 |

**[Table 3]**

| Degree of bitterness reduction | | IX (ppm) | | | | |
|---|---|---|---|---|---|---|
| | | 20 | 50 | 100 | 150 | 200 |
| EG (ppm) | 0 | - | - | - | - | - |
| | 50 | 1.0 | - | - | - | - |
| | 100 | - | 0.0 | 0.0 | 0.0 | 0.0 |
| | 500 | - | 1.0 | 1.0 | 1.0 | 1.0 |
| | 1000 | - | 1.0 | 1.0 | 2.0 | 2.5 |
| | 5000 | - | 1.5 | 2.5 | 3.0 | 3.0 |
| | 10000 | - | 2.0 | 3.0 | 3.5 | 4.0 |
| | 20000 | - | 2.0 | 3.5 | 4.5 | 4.5 |

The above results show that the bitterness of the isoxanthohumol can be reduced when the weight ratio of ethyl glycoside to isoxanthohumol (ethyl glycoside/isoxanthohumol) is 2.5 to 400.

### (Example 2)

The xanthohumol emulsion obtained in Preparation Example 1 and EG were dissolved in water to prepare samples.

The samples were prepared with five different xanthohumol concentrations of 25 ppm, 50 ppm, 100 ppm, 150 ppm, and 200 ppm, and eight different EG concentrations of 0 ppm, 50 ppm, 100 ppm, 500 ppm, 1000 ppm, 5000 ppm, 10000 ppm, and 20000 ppm. The xanthohumol emulsion was used in amounts that gave the above xanthohumol concentration values in the respective samples.

Two panelists experienced in sensory evaluation performed sensory evaluation on the bitterness of each sample according to the same method and criteria as in Example 1. For the sensory evaluation, the panelists exchanged views in advance as in Example 1, using samples having an EG concentration of 0 ppm (with no addition of EG) and containing an xanthohumol emulsion (specifically, samples having an xanthohumol concentration of 20 ppm, 100 ppm, 150 ppm, or 200 ppm), to make sure that the samples having the same xanthohumol concentration would be given the same score for the bitterness intensity evaluation. No bitterness derived from the emulsifier was tasted.

Table 4 shows the weight ratio of ethyl glycoside (EG) to xanthohumol (XN) (EG/XN) in each sample.

Table 5 shows the result of the sensory evaluation (average scores of the bitterness intensity) of each sample.

Table 6 shows the degree of bitterness reduction achieved by addition of EG, calculated from the results shown in Table 5. The degree of bitterness reduction shown in Table 6 is indicated by a value X2 minus Y2 (X2 - Y2), where X2 is the score of a first sample shown in Table 5 not containing EG and Y2 is the score of a second sample containing EG shown in Table 5, the second sample having the same xanthohumol concentration as that of the first sample. When the value of (X2 - Y2) shown in Table 6 is 1 or greater, the bitterness was evaluated as being reduced.

**[Table 4]**

| EG/XN | | XN (ppm) | | | | |
|---|---|---|---|---|---|---|
| | | 25 | 50 | 100 | 150 | 200 |
| EG (ppm) | 0 | 0 | 0 | 0 | 0 | 0 |
| | 50 | 2 | - | - | - | - |
| | 100 | - | 2 | 1 | 0.7 | 0.5 |
| | 500 | - | 10 | 5 | 3.3 | 2.5 |
| | 1000 | - | 20 | 10 | 6.7 | 5 |
| | 5000 | - | 100 | 50 | 33.3 | 25 |
| | 10000 | - | 200 | 100 | 66.7 | 50 |
| | 20000 | - | 400 | 200 | 133.3 | 100 |

**[Table 5]**

| Bitterness intensity | | XN (ppm) | | | | |
|---|---|---|---|---|---|---|
| | | 25 | 50 | 100 | 150 | 200 |
| EG (ppm) | 0 | 3.5 | 3.5 | 4.5 | 6.0 | 7.0 |
| | 50 | 2.5 | - | - | - | - |
| | 100 | - | 2.5 | 4.0 | 5.5 | 6.5 |
| | 500 | - | 2.0 | 3.5 | 5.0 | 6.0 |
| | 1000 | - | 1.0 | 3.0 | 3.5 | 5.0 |
| | 5000 | - | 1.0 | 2.5 | 3.0 | 4.0 |
| | 10000 | - | 1.5 | 2.0 | 3.5 | 4.0 |
| | 20000 | - | 3.0 | 3.5 | 4.0 | 5.0 |

**[Table 6]**

| Degree of bitterness reduction | | XN (ppm) | | | | |
|---|---|---|---|---|---|---|
| | | 25 | 50 | 100 | 150 | 200 |
| EG (ppm) | 0 | - | - | - | - | - |
| | 50 | 1.0 | - | - | - | - |
| | 100 | - | 1.0 | 0.5 | 0.5 | 0.5 |
| | 500 | - | 1.5 | 1.0 | 1.0 | 1.0 |
| | 1000 | - | 2.5 | 1.5 | 2.5 | 2.0 |
| | 5000 | - | 2.5 | 2.0 | 3.0 | 3.0 |
| | 10000 | - | 2.0 | 2.5 | 2.5 | 3.0 |
| | 20000 | - | 0.5 | 1.0 | 2.0 | 2.0 |

The above results show that the bitterness of the xanthohumol can be reduced when the weight ratio of ethyl glycoside to xanthohumol (ethyl glycoside/xanthohumol) is 2 to 200.

## Claims

1. An isoxanthohumol-containing composition, comprising:
isoxanthohumol; and
ethyl glycoside,
wherein a weight ratio of ethyl glycoside to isoxanthohumol, i.e., ethyl glycoside/isoxanthohumol, is 2.5 to 400.

2. The isoxanthohumol-containing composition according to claim 1,
wherein the composition is a beverage.

3. The isoxanthohumol-containing composition according to claim 2,
wherein an isoxanthohumol concentration is 20 to 200 ppm.

4. The isoxanthohumol-containing composition according to claim 2 or 3,
wherein an ethyl glycoside concentration is 50 to 20000 ppm.

5. The isoxanthohumol-containing composition according to any one of claims 1 to 4,
wherein the ethyl glycoside is ethyl glucoside.

6. A xanthohumol-containing composition comprising:
xanthohumol; and
ethyl glycoside,
wherein a weight ratio of ethyl glycoside to xanthohumol, i.e., ethyl glycoside/xanthohumol, is 2 to 200.

7. The xanthohumol-containing composition according to claim 6,
wherein the composition is a beverage.

8. The xanthohumol-containing composition according to claim 7,
wherein an xanthohumol concentration is 25 to 200 ppm.

9. The xanthohumol-containing composition according to claim 7 or 8,
wherein an ethyl glycoside concentration is 50 to 20000 ppm.

10. The xanthohumol-containing composition according to any one of claims 6 to 9,
wherein the ethyl glycoside is ethyl glucoside.

11. A method of producing an isoxanthohumol-containing composition containing isoxanthohumol and ethyl glycoside, comprising:
adding ethyl glycoside such that a weight ratio of ethyl glycoside to isoxanthohumol, i.e., ethyl glycoside/isoxanthohumol, in the composition is 2.5 to 400.

12. A method of reducing the bitterness of isoxanthohumol, comprising:
mixing isoxanthohumol and ethyl glycoside such that a weight ratio of ethyl glycoside to isoxanthohumol, i.e., ethyl glycoside/isoxanthohumol, is 2.5 to 400.

13. A method of producing a xanthohumol-containing composition containing xanthohumol and ethyl glycoside, comprising:
adding ethyl glycoside such that a weight ratio of ethyl glycoside to xanthohumol, i.e., ethyl glycoside/xanthohumol, in the composition is 2 to 200.

14. A method of reducing the bitterness of xanthohumol, comprising:
mixing xanthohumol and ethyl glycoside such that a weight ratio of ethyl glycoside to xanthohumol, i.e., ethyl glycoside/xanthohumol, is 2 to 200.
